# NEUE EUROPÄISCHE PATENTSCHRIFT

(11) **EP 2 327 902 B2**
(45) Veröffentlichungstag und Bekanntmachung des Hinweises auf die Entscheidung über den Einspruch: **26.06.2019**
(45) Hinweis auf die Patenterteilung: 21.11.2012
(21) Anmeldenummer: 11158709.3
(22) Anmeldetag: 06.07.2009
(51) Int. Cl.: F16D 65/14

(54) **Bremsbelag für eine selbstverstärkende Scheibenbremse**
Brake pad for a self-energising disc brake
Garniture de frein pour un frein à disque à auto-amplification

(30) Priorität: 04.07.2008 DE 102008031442
(43) Veröffentlichungstag der Anmeldung: 01.06.2011
(62) Teilanmeldung aus: 09772192.2
(73) Patentinhaber: KNORR-BREMSE Systeme für Nutzfahrzeuge GmbH, 80809 München (DE)
(72) Erfinder: Baumgartner, Johann, 85368, Moosburg (DE); Trimpe, Robert, 82234, Weßling (DE); Gruber, Robert, 83539, Pfaffing (DE); Geißler, Steffen, 63110, Rodgau (DE); Pericevic, Aleksandar, 80636, München (DE)
(74) Vertreter: Specht, Peter

(56) Entgegenhaltungen:
- WO-A-2008/014927
- WO-A1-03/071150
- DE-A1-102005 015 108
- DE-A1-102006 029 943
- DE-B3-102006 036 278

## Beschreibung

Die Erfindung betrifft einen Bremsbelag für eine selbstverstärkende Scheibenbremse nach dem Oberbegriff des Anspruchs 1.

Selbstverstärkende Scheibenbremsen, wie sie z.B. aus der DE 10 2006 036 278 B3 bekannt sind, nutzen die bei einer Bremsung auf den Bremsbelag wirkende Umfangskräfte zur Unterstützung der Zuspannkraft, die von einem elektromechanischen Antrieb oder einen pneumatisch betätigten Bremszylinder über eine Zuspanneinrichtung aufgebracht wird. Dadurch kann der Antrieb erheblich kleiner dimensioniert werden.

Diese Selbstverstärkung wird durch eine Selbstverstärkungseinrichtung erreicht, die Bestandteil der Zuspanneinrichtung ist.

Dabei sind in einer Führungsplatte, bezogen auf die Bremsscheibe, in axialer Richtung bewegliche Druckstempel befestigt, die in Korrespondenz mit dem zuspannseitigen Bremsbelag, üblicherweise einer einen Reibbelag tragenden Belagträgerplatte oder einer Belagdruckplatte als Bestandteil des Bremsbelages, jeweils eine Spreizlagerung bilden, wozu jeder Druckstempel stirnseitig eine Lagerkugel aufweist, die einerseits in einer mit in Umfangsrichtung der Bremsscheibe von innen nach außen ansteigenden Rampen versehenen Vertiefung einliegt und andererseits in einer kalottenförmigen Aufnahme einer Druckplatte des Bremsbelages gehalten ist.

Bei einer Bremsung, wenn also der Bremsbelag mittels der Zuspanneinrichtung gegen die Bremsscheibe gepresst wird, bewegt sich der Bremsbelag aufgrund der Reibkräfte beim Anpressen an die Bremsscheibe in deren Drehrichtung, wobei sich gleichzeitig die zugeordnete Rampe entlang der Lagerkugel bewegt, unter Verstärkung der auf die Bremsscheibe wirkenden axial ausgerichteten Bremskraft.

Bei einem Lösen der Bremse wird der Bremsbelag mittels einer Rückstellfeder in eine Ausgangsstellung gebracht, in der die Spreizlagerung praktisch unwirksam ist.

In der WO 03/071150 A1 ebenso wie in der DE 10 2005 015 108 A1 ist jeweils ein Bremsbelag geoffenbart, dessen Belagdruckplatte auf der vom Reibbelag abgewandten Seite Vertiefungen mit einer Rampenkontur aufweist.

Der Erfindung liegt die Aufgabe zugrunde, einen Bremsbelag für eine selbstverstärkende Scheibenbremse der gattungsgemäßen Art so weiterzuentwickeln, dass ihre Funktionssicherheit dauerhaft verbessert und ihre Standzeit erhöht werden.

Diese Aufgabe wird durch einen Bremsbelag mit den Merkmalen des Anspruchs 1 gelöst.

Derart werden direkt in den Bremsbelag weitere Funktionen integriert und zwar die Halterung für wenigstens einen Bremsstempel. Vorzugsweise handelt es sich bei diesem Ansatz um einen Ansatz für einen mittleren von insgesamt drei Bremsstempeln.

Nach einer vorteilhaften Weiterbildung des erfindungsgemäßen Bremsbelages sind die Rampen des Spreizlagers in einen separaten Einsatz eingebracht, der mit der Belagdruckplatte bzw. der Belagträgerplatte verbunden ist, z.B. durch Schweißen.

Stattdessen können die Rampen einstückig mit der Belagdruckplatt oder einer an der Belagdruchplatte anbringbaren weiteren platte ausgeführt und durch eine geeignete Nachbehandlung ausreichend verschleiß- und korrosionsfest aufbereitet werden. Diese einstückige Ausbildung lässt sich besonders kostengünstig und platzsparend realisieren.

Im Übrigen bietet diese Ausführungsform eine Gewähr dafür, dass die entsprechenden Bauteile der Spreizlagerung bei einem Bremsbelagwechsel nicht wieder verwandt werden können.

Weitere vorteilhafte Ausbildungen der Erfindung sind in den Unteransprüchen gekennzeichnet.

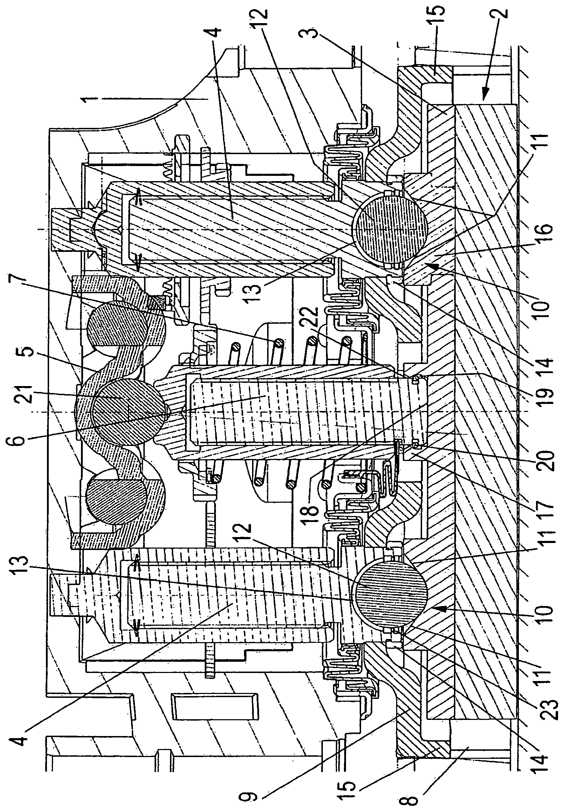

Ein Ausführungsbeispiel der Erfindungen wird nachfolgend anhand der beigefügten Zeichnung beschrieben.

Die einzige Figur zeigt einen Teilausschnitt einer Scheibenbremse in einer geschnittenen Draufsicht.

In der Figur ist eine selbstverstärkende Scheibenbremse dargestellt, mit einem an einem ortsfesten Bremsträger 8 gehaltenen Bremssattel 1, einem zuspannseitigen Bremsbelag 2 und einem reaktionsseitigen, die gegen eine Bremsscheibe pressbar sind. Im Beispiel ist lediglich der zuspannseitige Bremsbelag 2 dargestellt.

Zum Zuspannen ist eine Zuspanneinrichtung in Form eines Drehhebels 5 und eines Bremsstempels 6 vorgesehen, über den der Bremsbelag 2 in axialer Richtung, bezogen auf die Drehachse der Bremsscheibe, bewegbar ist.

Weiter ist eine Selbstverstärkungseinrichtung vorgesehen, die Spreizlager 10 aufweist, denen jeweils ein Druckstempel 4 zugeordnet ist, die mit einer Nachstelleinrichtung zur verschleißbedingten Nachstellung des Bremsbelages 2 in Eingriff stehen.

Die Druckstempel 4 sind mit ihrem dem Bremsbelag 2 zugewandten Endbereich in einer Führungsplatte 9 gehalten, die in dem Bremsträger 8 in Zuspannrichtung verschiebbar ist.

Jede Spreizlagerung 10 weist eine im zugeordneten Druckstempel 4 stirnseitig eingelassene und darin in einer Gleitlagerschale 13 positionierte Lagerkugel 12 auf, die andererseits in einer kalottenförmigen Vertiefung einer Belagdruckplatte 3 des Bremsbelages 2 einliegt, deren Seitenwände im Sinne von ansteigenden Rampen 11 ausgebildet sind.

Bei einer Bremsung, wenn also mittels des Bremshebels 5 der Bremsbelag 2 gegen die Bremsscheibe gepresst wird, entstehen Umfangskräfte, durch die der Bremsbelag 2 in Drehrichtung der Bremsscheibe verschoben wird, unter Abstandsveränderung des Bremsbelages 2 zum Druckstempel 4.

Beim Lösen der Bremse wird der Bremsbelag 2 durch eine Rückstellfeder 7 in eine sozusagen entspannte Ausgangsstellung zurückgeführt, in der die Lagerkugel 12 praktisch funktionsfrei in der Vertiefung des Bremsbelages 2 einliegt.

In dieser Stellung, die in der Figur erkennbar ist, liegen der Druckstempel 4 und die Belagdruckplatte 3 dicht aneinander, unter Einschluss der Spreizlagerung 10.

Zum Toleranzausgleich ist im Beispiel an dem der Belagdruckplatte 3 zugewandten Ende des Druckstempels 4 ein Dichtring 14 angeordnet, der vorzugsweise aus einem temperaturbeständigen, plastifizierbaren Material besteht und der dichtend an der zugeordneten Fläche der Belagdruckplatte 3 anliegt.

Alternativ oder ergänzend wie im Beispiel, ist an der Lagerkugel 12 ein Dichtring 23 angeordnet, mit dem die Gleitlagerschale 13 und die Spreizlagerung 10 gegenüber der Umgebung abgedichtet sind.

Zur Einbringung der die Rampen 11 aufweisenden Vertiefung kann diese, wie im Beispiel linksseitig dargestellt, einstückig mit der Belagdruckplatte 3 ausgebildet sein. Alternativ besteht auch die Möglichkeit, die Vertiefung in einem separaten Einsatz 16 vorzusehen, der fest mit der Belagdruckplatte 3 verbunden ist.

Die Führungsplatte 9 weist im Bereich ihrer Druckstempelaufnahme eine entgegengesetzt zum Bremsbelag 2 gerichtete Ausstülpung auf, während sie auf ihrer dem Bremsbelag 2 zugewandten Seite mit einem umlaufenden Wannenrand 15 versehen ist, der eine wannenförmige Vertiefung der Führungsplatte 9 begrenzt, in der der Bremsbelag 2 bzw. die Belagdruckplatte 3 bereichsweise einliegt.

Durch den Wannenrand 15 wird wirksam verhindert, dass auch im Fall einer Spreizung des Bremsbelages 2 vom Druckstempel 4 bei einer Bremsung der zwischen der Führungsplatte 9 und der Belagdruckplatte 3 gebildete Spalt spritzwassergeschützt abgedeckt ist.

Der Bremsstempel 6 ist mit seinem zugeordneten Endbereich in einer mit einer Hinterschneidung 19 versehenen Aufnahme 18 so gehalten, dass bei einer bremsbedingten Querverschiebung des Bremsbelages 2 eine Auslenkung möglich ist, wobei eine Kugel 21, mit der sich der Bremsstempel 6 am Bremshebel 5 abstützt, als Schwenklager fungiert.

Die Aufnahme 18 ist in einem angeformten Ansatz 17 der Belagdruckplatte 3 angeordnet, mit einer trichterförmigen Einschuböffnung 22, durch die der Bremsstempel 6 einsteckbar ist.

Zu dessen axialer Sicherung ist in einer umlaufenden Nut des Bremsstempels 6 ein federnder Ring 20 angeordnet, der sich beim Einschieben des Bremsstempels 6 in die Aufnahme 18 zusammendrückt und nach Einführen aufspreizt und an der Hinterschneidung 19 zur Anlage kommt.

### Bezugszeichenliste

- 1: Bremssattel
- 2: Bremsbelag
- 3: Belagdruckplatte
- 4: Druckstempel
- 5: Bremshebel
- 6: Bremsstempel
- 7: Rückstellfeder
- 8: Bremsträger
- 9: Führungsplatte
- 10: Spreizlagerung
- 11: Rampe
- 12: Lagerkugel
- 13: Gleitlagerschale
- 14: Dichtring
- 15: Wannenrand
- 16: Einsatz
- 17: Ansatz
- 18: Aufnahme
- 19: Hinterschneidung
- 20: Ring
- 21: Kugel
- 22: Einschuböffnung
- 23: Dichtring

## Patentansprüche

1. Bremsbelag für eine selbstverstärkende Scheibenbremse, mit einer Belagdruckplatte (3), die einen Reibbelag trägt, mit folgenden Merkmalen:
a) an der Belagdruckplatte (3) oder an einer an der Belagdruckplatte anbringbaren weiteren Platte ist auf der von dem Reibbelag abgewandten Seite zumindest eine Vertiefung ausgebildet, die eine Rampenkontur hat,
b) die Belagdruckplatte (3) oder die weitere Platte weist auf der von dem Reibbelag abgewandten Seite einen Ansatz (17) auf, mit einer Aufnahme (18), in der ein Bremsstempel (6) halterbar ist,
c) die Aufnahme (18) weist an ihrer Innenfläche wenigstens eine Hinterschneidung (19) auf,
**dadurch gekennzeichnet, dass**
d) die Aufnahme (18) eine trichterförmige Einschuböffnung (22) aufweist.

2. Bremsbelag nach Anspruch 1, **dadurch gekennzeichnet, dass** die Vertiefung in die Belagdruckplatte (3) eingebracht ist.

3. Bremsbelag nach Anspruch 1, **dadurch gekennzeichnet, dass** die Vertiefung in einem mit der Belagdruckplatte (3) verbundenen Einsatz (16) angeordnet ist.

4. Bremsbelag nach einem der vorhergehenden Ansprüche, **dadurch gekennzeichnet, dass** in der Aufnahme (18) der Bremsstempel (6) zur axialen Sicherung halterbar ist.

## Claims

1. Brake lining for a self-reinforcing disc brake, with a lining pressure plate (3) which carries a friction lining, having the following characteristics:
a) on the lining pressure plate (3) or on a further plate that can be attached to the lining pressure plate at least one recess with a ramp-like contour is formed on the side facing away from the friction lining,
b) on the side facing away from the friction lining the lining pressure plate or the said further plate has an attachment (17) with a holder (18) in which a brake plunger (6) can be held,
c) on its inside surface the attachment (18) has at least one undercut (19),
**characterised in that**
d) the holder (18) has a funnel-shaped insertion opening (22).

2. Brake lining according to Claim 1, **characterised in that** the recess is formed in the lining pressure plate (3).

3. Brake lining according to Claim 1, **characterised in that** the recess is arranged in an insert (16) connected to the lining pressure plate (3).

4. Brake lining according to any of the preceding claims, **characterised in that** in the holder (18) the brake plunger (6) can be held in order to secure it axially.

## Revendications

1. Garniture de frein pour un frein à disque se renforçant de soi-même, comprenant une plaque de serrage de garniture (3), portant une garniture de friction, ayant les caractéristiques suivantes :
a) sur la plaque de serrage de garniture (3) ou sur une autre plaque pouvant être mise sur la plaque de serrage de garniture est constituée, du côté opposé à la garniture de friction, au moins une cavité, qui a un contour en rampe,
b) la plaque de serrage de garniture (3) ou l'autre plaque a, du côté opposé à la garniture de friction, une saillie (17) ayant un logement (18), dans lequel un poinçon de freinage (6) peut être maintenu,
c) le logement (18) comprend au moins une contredépouille sur la face intérieure,
**caractérisé en ce que**
d) le logement (18) a une ouverture (22) en entonnoir.

2. Garniture de frein selon la revendication 1, **caractérisée en ce que** la cavité est formée dans la plaque de serrage de garniture (3).

3. Garniture de frein selon la revendication 1, **caractérisée en ce que** la cavité est dans un insert (16) relié à la plaque de serrage de garniture (3).

4. Garniture de frein selon l'une des revendications précédentes, **caractérisée en ce qu'**un poinçon de frein (6) peut, pour la fixation axiale, être maintenu dans le logement (18).
